# FASCICULE DE BREVET EUROPEEN

(11) **EP 0 574 584 B1**
(45) Date de publication et mention de la délivrance du brevet: **18.03.1998**
(21) Numéro de dépôt: 92904642.3
(22) Date de dépôt: 31.01.1992
(51) Int. Cl.: B65G 5/00, E21B 43/12, E21B 43/18, E21B 43/00, E21B 43/24

(54) **PROCEDE D'ALIMENTATION EN GAZ D'UN UTILISATEUR**
VERFAHREN ZUR GASBELIEFERUNG EINES BENUTZERS
METHOD FOR PROVIDING A USER WITH A GAS SUPPLY

(30) Priorité: 06.03.1991 SU 4913858
(43) Date de publication de la demande: 22.12.1993
(73) Titulaire: NAUCHNO-PROIZVODSTVENNOE PREDPRIYATIE BIOTEKHINVEST, Moscow, 109180 (RU); NERUBIO INVESTMENTS B.V., 1077 XX Amsterdam (NL)
(72) Inventeur: BELONENKO, Vladimir Nikolaevich p/o Razvilki, 10-6, Moskovskaya obl., 142717 (RU); GABRIELYANTS, Michail Grigorievich, Moscow, 117454 (RU)
(74) Mandataire: Hirsch, Marc-Roger
(86) Numéro de dépôt international: RU9200025
(87) Numéro de publication internationale: WO9215511

(56) Documents cités:
- FR-A- 2 168 942
- US-A- 4 149 596
- US-A- 4 149 598
- US-A- 4 444 259
- US-A- 4 701 072
- Aucun document additionnel pertinent relevé

## Description

### Domaine technique

La présente invention concerne les procédés d'approvisionnement de consommateurs en gaz, et plus concrètement un procédé d'approvisionnement en gaz consistant à former une capacité d'accumulation, de préférence à proximité immédiate de consommateurs, à la remplir avec le gaz extrait à partir de couches ou nappes aquifères saturées de gaz, et à prélever ce gaz.

L'invention peut être appliquée pour créer un gisement de gaz prêt à être utilisé et pour amener, par un procédé simple et sûr à partir de ce gisement, du gaz aux consommateurs.

### Arrière-plan technologique

Il est connu de réaliser l'extraction du gaz à partir de gisements de gaz à condensats et de gisements de pétrole et de gaz à condensats sur les lieux mêmes de leur formation naturelle qui s'est déroulée au cours d'une longue période de temps géologiques.

L'approvisionnement en gaz des consommateurs (tel que les entreprises industrielles, les services urbains d'hygiène, etc...) est réalisé généralement selon le schéma , qui consiste à explorer un site, à réaliser l'extraction du gaz, à transporter ce gaz vers des zones de consommation et à créer des capacités d'accumulation qu'on remplit de gaz et dans lesquelles on prélève le gaz pour les consommateurs.

Pour la solution de ce problème d'approvisionnement, on a souvent mis en oeuvre dans l'art antérieur (et on utilise actuellement) le procédé consistant à utiliser une capacité souterraine pour le stockage de gaz à proximité des lieux de consommation. Un tel procédé est décrit par exemple dans l'article de Trebine F.A., Makogone JuF., Basniev K.S. "Production du gaz naturel", Ed "Nedra", Moscou, 1976, page 368. Les capacités pièges formées dans les conditions géologiques naturelles sont utilisées lors de l'exploration des gisements de gaz naturels existants pour déterminer l'état des réserves en suivant la chute de la pression dans les diverses couches.

Par exemple, selon le certificat d'auteur de l'URSS
n° 1032171, publié le 30 juillet 1983, un piège disposé au-dessus du gisement de gaz est utilisé pour évaluer les réserves en suivant la chute de la pression dans les couches lors du recyclage du gaz dans le piège, avant son prélèvement ultérieur.

Dans le certificat d'auteur de l'URSS n° 442287 publié le 21 novembre 1974, on propose de faire se dégager le gaz libre à partir de gisements de gaz hydraté en agissant sur ce dernier par des oscillations provoquées par un émetteur électromagnétique ou par un dispositif à magnétostriction placé dans le forage de recherche de gaz. On connaît un procédé d'exploitation d'un forage pétrolier consistant à immerger dans le trou de forage une source d'émission d'oscillations acoustiques pour provoquer le dégazage de la colonne de liquide et assurer ainsi un effet d'ascension du gaz, ce procédé étant décrit dans le certificat d'auteur de l'URSS n° 859606 publié le 5 octobre 1981.

On connaît également un procédé de production de gaz consistant à le transporter à la surface avec le liquide de la couche à la surface, en réalisant une séparation subséquente du gaz par rapport au liquide (Aide-mémoire sur la production du pétrole, Ed. "Nedra", Moscou 1974., pages 511 et 512).

On connaît un procédé d'augmentation de la production de la gaz naturel sous une couche aquifère sous une pression de couche (US-A-4 116 276 du 26 septembre 1978) comprenant l'évacuation de l'eau sous une pression naturelle à travers un ou plusieurs puits forés à une certaine distance d'un piège naturel ou plus profondément que celui-ci. A la suite d'une baisse de la pression dans la couche, le gaz qui se dégage parvient dans le piège naturel, d'où il peut être évacué. A la suite de l'évacuation du gaz du piège, la pression dans la couche décroît encore, ce qui aboutit à un dégagement supplémentaire du gaz vers le piège. Lorsque l'arrivée de l'eau sous la pression naturelle s'interrompt, on peut procéder à l'évacuation artificielle supplémentaire de l'eau.

Les inconvénients du procédé résident en une grande main d'oeuvre et une longue durée de processus et sa rentabilité faible, ce qui est dû à la nécessité d'évacuer des quantités importantes de liquide depuis la couche. Le procédé n'assure par l'évacuation de la totalité du gaz depuis le piège sous-jacente à la couche aquifère.

De plus, la nécessité d'utiliser une grande quantité d'eau de couche ainsi que la protection de l'environnement posent aussi des problèmes difficiles à résoudre. Enfin, ce procédé ne peut pas être utilisé d'une manière efficace pour des gisements à basse pression de couche.

Dans le brevet US-A-4 040 487 du 9 août 1977, on décrit un procédé d'augmentation de la production de gaz naturel à partir d'une couche aquifère contenant du gaz, par pompage préalable de l'eau.

On connaît également une technique d'obtention d'hydrocarbures à partir de leur gisement naturel, en utilisant des effets vibratoires et oscillatoires (voir US-A-3 952 800 du 27 avril 1976, US-A-4 060 128 du 29 novembre 1977, US-A- 4 114 689 du 19 septembre 1978, US-A-4 417 621 du 29 novembre 1983), qui sont accompagnés d'effets thermiques (voir par exemple US-A-4 049 053 du 20 septembre 1977), ou d'effets électromagnétiques (US-A-4 084 638 du 18 avril 1978, US-A-4 164 978 du 21 août 1979, US-A-4 638 863 du 25 Juillet 1986, US-A-4 705 108 du 10 novembre 1987)

Ces brevets ne prévoient cependant pas d'opération de dégazage des couches aquifères saturées de gaz, de formation de capacités d'accumulation, de création de nouvelles cavités souterraines pour stockage de gaz, etc...

Les inconvénients essentiels des procédé antérieurs sont les suivants.

En cas d'utilisation de capacités pour le stockage souterrain du gaz à proximité des lieux de consommation, ces capacités sont remplies du gaz déjà extrait et qui est préalablement transféré depuis des zones de production se trouvant généralement à de grandes distances desdites capacités.

Ce schéma d'approvisionnement en gaz des consommateurs suppose que l'on construise des gazoducs, des stations de pompage, etc.., ce qui entraîne de grandes dépenses financières, matérielles, énergétiques et autres.

L'extraction de l'eau du gisement avec une séparation subséquente du gaz en surface est en fait une opération non rentable, qui entraîne le transport d'une grande quantité de liquides et provoque d'autres problèmes, notamment ceux dus à la très forte minéralisation de l'eau du gisement.

La production de gaz à partir de couches aquifères par réduction de la pression grâce à un pompage constant de l'eau pendant une longue durée (au moins pendant une année) présente les mêmes inconvénients que ceux décrits dans l'exemple précédent. Le pompage de l'eau à partir de chaque trou de forage doit atteindre en volume une capacité de 2,4 à 40 m3 (de 15 à 250 barils) par jour, ce qui entraîne une extraction du gaz très lente et un faible rendement d'extraction, inférieur à l'unité.

Les autres exemples de l'art antérieur sont liés aux niveaux des réserves naturelles d'hydrocarbures existantes

Les gisements d'hydrocarbures exploités jusqu'à présent s'épuisent et les gisement nouvellement découverts sont généralement situés à des distances considérables des régions industrielles et des autres lieux de consommation de gaz naturel; or le transport de ce gaz est onéreux et exige beaucoup de dépenses. La formation de nouveaux gisements par des processus qui se déroulent au sein de la terre s'étend sur la durée de périodes géologiques et ne peut être considéré.

Compte tenu de ce qui précède, le problème toujours plus actuel est celui de l'extraction industrielle du gaz à partir d'autres sources, en particulier celui de l'obtention du gaz à partir de couches ou nappes aquifères contenant ces gaz dont l'extraction directe du gaz était, jusqu'à la présente invention estimée impossible ou au moins industriellement non rentable.

De telles nappes aquifères contenant des gaz sont assez répandus et se rencontrent fréquemment à proximité des lieux de consommation de gaz. Ces couches sont souvent réunies et forment de vastes bassins souterrains occupant des surfaces considérables atteignant jusqu'à plusieurs milliers de kilomètres carrés et éventuellement plus. L'utilisation de ces couches pour l'extraction du gaz, y compris dans les lieux où les gisements de gaz et de brut contiennent des parties sous forme de condensats naturels, permettent d'accroître sensiblement les volumes de gaz à extraire et facilitent la solution du problème de l'approvisionnement en gaz des consommateurs.

Avant la mise en oeuvre de la présente invention, l'extraction industrielle du gaz contenu dans des couches aquifères n'a pas été développée comme cela aurait pu l'être, du fait qu'elle exige beaucoup de travail et que les techniques existantes ne permettent que l'obtention d'une faible efficacité.

La présente invention vise à résoudre ces problèmes.

### Description de l'invention

Le but de l'invention est la mise en oeuvre d'un procédé d'approvisionnement en gaz de consommateurs, ce gaz étant extrait à partir de couches aquifères saturées de gaz, l'obtention d'une augmentation du volume des réserves de gaz à extraire et la réduction des dépenses dues au transfert du gaz. Un but supplémentaire de l'invention réside dans l'utilisation de sources naturelles ou artificielles d'oscillations élastiques qui existent dans différentes régions, afin de réduire l'énergie à dépenser pour extraire le gaz à partir desdits gisements.

Le problème posé est résolu en ce que l'on forme la capacité d'accumulation au-dessus d'une couche aquifère saturée de gaz, et que l'on réalise le remplissage en gaz de la capacité en exerçant une action périodique sur la couche aquifère saturée de gaz.

On a découvert que c'est précisément l'utilisation de ces moyens du procédé qui permet d'extraire d'une façon efficace et sûre le gaz à partir de couches aquifères saturées de gaz et de stocker le gaz dans la capacité formée, pour assurer aux consommateurs un approvisionnement en gaz stable.

L'action périodique sur la couche aquifère saturée de gaz peut être exercée en générant dans ladite couche des oscillations élastiques, par exemple à l'aide d'explosions et/ou d'une source acoustique, d'un vibreur et/ou d'une source d'ondes sismiques.

L'action périodique peut être exercée en augmentant la température, par exemple par injection de vapeur surchauffée dans la couche aquifère (y compris par le trou de forage) ou à l'aide d'un organe de chauffage électrique descendu dans la couche par exemple par le puits de production. L'action thermique est efficace quand le gaz est à l'état de gaz humide.

On peut exercer une action efficace sur la couche aquifère saturée de gaz en utilisant un champ électromagnétique, par exemple, en réalisant des décharges électriques à l'aide d'un éclateur électrique ou au moyen d'électrodes disposées dans la couche aquifère et par application à ces électrodes d'une tension constante, par exemple une modulation de fréquence.

L'action exercée par des oscillations élastiques et par le courant électrique agit non seulement sur les processus réalisés dans les fluides, mais également sur les propriétés collectrices de la couche. En effet, à la suite de l'action exercée sur la couche aquifère saturée de gaz par des impulsions électriques, il se produit des effets thermiques, électromagnétiques, physico-chimiques (par exemple l'action du courant électrique provoque des phénomènes d'électrolyse, d'électro-osmose, etc..), ainsi que des perturbations élastiques. En premier lieu, les ondes de choc produisent un craquèlement de la couche collectrice et un accroissement du débit de gaz qui se dégage du puits, ce qui conduit à une extraction plus complète à partir de la couche ou de la nappe.

L'effet périodique exercé par des oscillations élastiques accélère sensiblement les processus de dégagement du gaz à partir des couches aquifères et stimule et intensifie le déplacement du gaz vers la capacité d'accumulation. A l'aide des oscillations il est également possible de réguler le débit de dégagement du gaz. Par des oscillations à basse fréquence (de 0,1 à 60 Hz), il est possible, depuis la surface du sol, d'agir à partir d'une source d'oscillations sismiques, simultanément sur plusieurs couches aquifères saturées de gaz et s'étendant sur des surfaces et à des profondeurs considérables. Ces oscillations assurent un dégagement plus complet du gaz. Le dégazage périodique de la couche saturée de gaz peut être obtenu en créant des chutes de pression, par exemple en réalisant un prélèvement partiel de l'eau contenue dans la couche aquifère.

L'action périodique sur la couche aquifère saturée de gaz peut être exercée par l'action simultanée de tous les moyens cités ci-dessus selon des combinaisons variées et avec des modes d'action différents et qui sont fonction des conditions d'exploitation concrètes rencontrées.

L'effet et le niveau d'influence exercé sur la couche par les actions combinées sont déterminés non pas par la simple somme des effets de chacune des actions exercées, mais par des effets qualitatifs et quantitatifs nouveaux qui sont fonction des combinaisons indiquées. L'efficacité du procédé dans le cas où l'on exerce des actions combinées s'accroît. Ainsi, dans le cas où l'on combine l'action exercée par des oscillations élastiques avec la réduction de la pression, l'effet de dégazage est sensiblement augmenté et se déroule plus rapidement que lorsque l'on utilise séparément chacun des types d'action indiqués.

Les actions exercées, en plus de celles citées, peuvent être constituées par n'importe quel autre type d'action connu dans la technique et conduisant à l'extraction du gaz à partir de couches aquifères saturées de gaz.

Le rythme selon lequel s'exercent les actions spécifiques est déterminé à partir d'un ensemble de conditions, parmi lesquelles on peut citer: les paramètres concernant l'état de la couche aquifère saturée de gaz (y compris la pression, la température, le volume spécifique), la composition de la couche, ses propriétés physiques et physico-chimiques, y compris les propriétés de relaxation des fluides et des formations, les modifications de la couche sous l'effet de l'action exercée, les propriétés collectrices et autres du terrain, les caractéristiques de résonance des couches, le niveau et la vitesse de remplissage de la capacité et le débit de prélèvement du gaz pour les besoins des consommateurs, et d'autres facteurs.

Sous l'influence de tous les effets cités ci-dessus, le dégagement du gaz commence dans la couche aquifère saturée de gaz. Ce gaz peut se trouver dans la couche aquifère sous différentes formes : à l'état dissous, en phase libre, sous forme de bulles de gaz, de gaz humide, etc...

Le dégagement de gaz à partir de telles couches s'effectue toutefois de façon inégale, ce qui est dû à la structure géologique et au remplissage de la couche, et l'inégalité du rendement ne peut pas être évitée en faisant varier la périodicité de l'action de dégazage. Cette inégalité dans le débit de dégagement ne permet pas d'utiliser le gaz qui se dégage pour réaliser un approvisionnement direct des consommateurs et même pour transporter le gaz de façon économique et efficace, par suite des différences brutales de pression et de débit que l'on rencontre, ce qui exige l'utilisation combinée des modes d'action énumérés ci-dessus.

Selon l'invention, en plus des actions périodiques de dégazage exercées sur la couche aquifère saturée de gaz, on utilise en combinaison avec elles, un procédé de formation d'au moins une capacité d'accumulation au-dessus de la couche. Sous le terme de "capacité d'accumulation", on entend un certain volume capable de recevoir le gaz qui se dégage, par exemple une cavité souterraine, et qui présente des valeurs de porosité et de perméabilité nettement supérieures à celles de l'enceinte entourant la couche aquifère saturée de gaz.

Par le terme de "formation de capacité d'accumulation", on entend, en fonction des conditions géologiques, différentes opérations. Ces opérations peuvent comporter, d'une part, la détection d'une surélévation structurale et l'accès par forage dans la zone de surélévation structurale en réalisant l'étanchéité indispensable du puits de forage et, d'autre part, la création de la capacité, par exemple par des séries d'explosions, par décongélation de roches congelées pendant plusieurs années, par formation de cavités par lavage de dépôts de sel dans des terrains argileux, etc..., ainsi que par un compactage supplémentaire des parois, en particulier de la couverture, par des opérations connues.

On peut former plusieurs capacités d'accumulation disposées au-dessus de différentes couches aquifères saturées de gaz, ces capacités pouvant être mises en communication entre elles.

Au cours du déroulement de l'action périodique sur la couche aquifère saturée de gaz et du dégagement subséquent du gaz, s'effectue le remplissage de la capacité d'accumulation formée. Le procédé n'exclut en outre pas la possibilité de réaliser une alimentation d'appoint à partir du gaz qui se dégage de la couche aquifère et en provenance de couches d'hydrocarbures situées à proximité.

Il se produit en fait la création d'un nouveau gisement de gaz qui joue le rôle principal de capacité d'accumulation remplie naturellement et dont le remplissage est susceptible d'être complété.

### Brève description des dessins

Sur la figure 1, on a représenté schématiquement un mode de réalisation du procédé selon la présente invention, dans lequel l'action de dégazage sur la couche aquifère saturée de gaz est exercée à l'aide d'une source locale qu'on fait descendre dans la couche aquifère par le puits de forage.

La figure 2 représente un autre mode de réalisation du procédé, dans lequel l'action de dégazage dans la couche aquifère saturée de gaz est exercée par l'action combinée de différentes sources.

La figure 3 illustre un autre mode de réalisation du procédé, dans lequel la capacité d'accumulation au-dessus de la couche aquifère saturée de gaz est formée à proximité d'une source naturelle ou artificielle d'oscillations ou de vibrations.

### Meilleurs modes de réalisation de l'invention

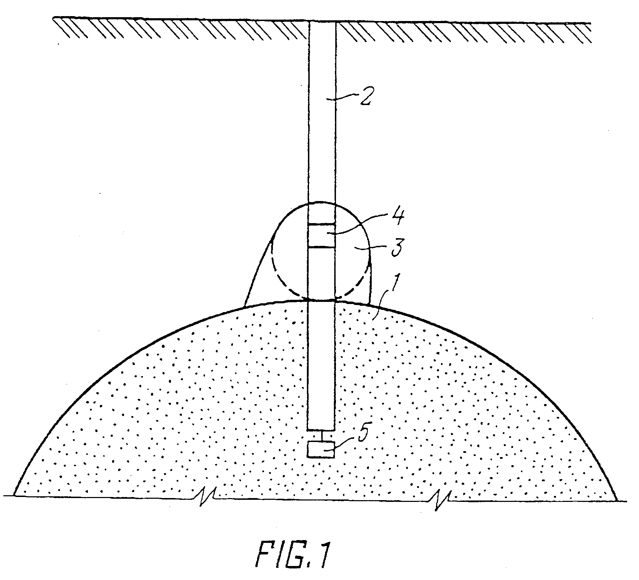

Au-dessus d'une couche aquifère 1 saturée de gaz, dans une zone choisie parce qu'elle est favorable à l'exploitation ou bien pour d'autres considérations, on réalise au moins un trou de forage 2 (figure 1). Pour collecter le gaz qui se dégage, on crée une cavité artificielle au-dessus de la couche pour constituer une capacité d'accumulation 3. Les moyens pour réaliser un prélèvement subséquent du gaz depuis la capacité d'accumulation sont constitués par un tronçon perforé 4 du puits ou du tube de forage.

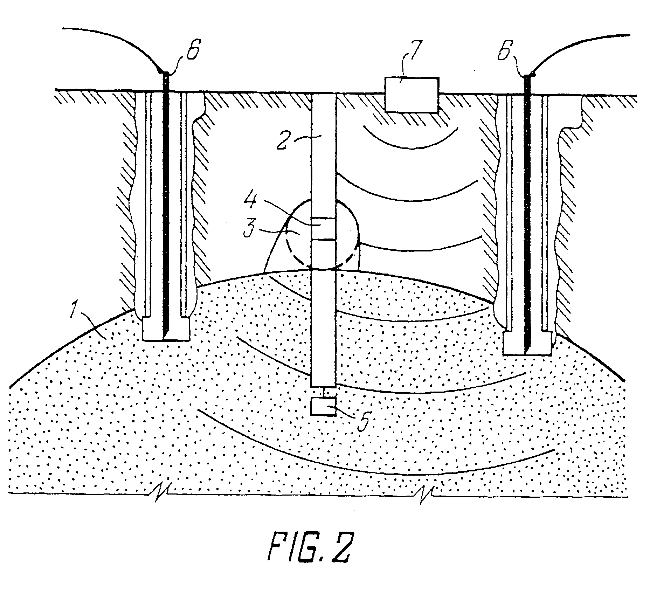

On exerce ensuite une action sur la couche aquifèrs saturée de gaz. Selon un mode de réalisation de l'invention, on exerce une action sur la couche aquifère saturée de gaz à l'aide de décharges électriques produites par un éclateur électrique 5 représenté de manière schématique et constituant la source locale exerçant l'action de dégazage. Comme source exerçant une action locale de dégazage, on peut utiliser une charge d'explosif. Selon un autre mode de réalisation, on agit sur la couche par un champ électromagnétique créé par des électrodes 6 descendues dans des puits auxiliaires spécialement forés, comme cela est représenté sur la figure 2. On peut exercer une action de dégazage avec une source 7 d'oscillations ou de vibrations élastiques, installée à la surface (figure 2). Dans-tous les cas, l'efficacité de l'action peut être augmentée par création de différences de pression, par exemple en réalisant un prélèvement partiel de l'eau par le trou de forage 2, ce qui réduit la pression dans la couche aquifère.

Comme on l'a déjà mentionné, différents modes d'action peuvent être combinés, comme représenté sur la figure 2.

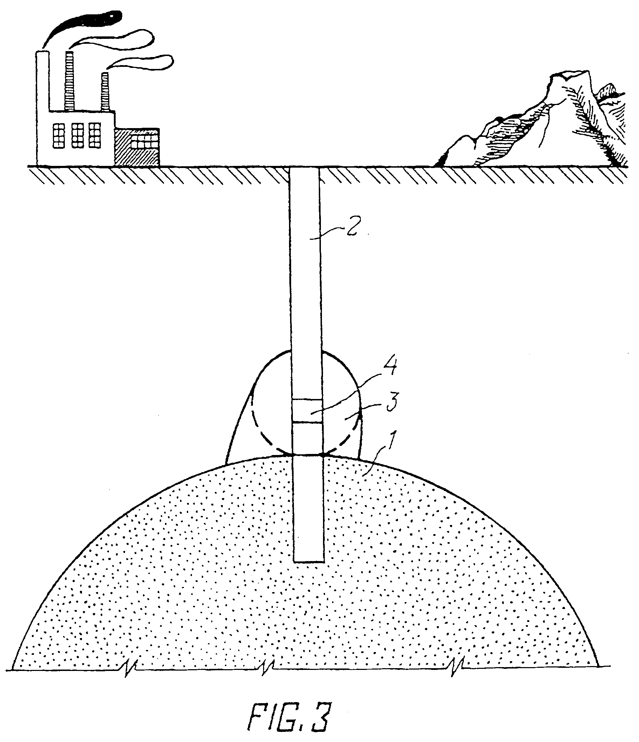

En outre, lors de la formation de la capacité d'accumulation à proximité de sources d'oscillations élastiques naturelles et/ou artificielles, comme cela est représenté sur la figure 3, on réduit sensiblement la nécessité de devoir réaliser une action de dégazage supplémentaire spéciale, étant donné que les ondes élastiques sismiques, en agissant sur la couche ou la nappe aquifère saturée de gaz, stimulent et accélèrent sensiblement le processus de dégagement du gaz.

Dans tous les modes de réalisation de l'action de dégazage de la couche aquifère saturée de gaz, le dégagement du gaz contenu dans cette couche a pour effet, à cause du poids spécifique faible du gaz, très inférieur à celui de l'eau, de faire monter le gaz qui s'accumule dans la capacité d'accumulation 3 et peut être extrait par le tronçon perforé 4 du puits de forage 2, en haut de la capacité.

Pour la mise en oeuvre du procédé, on a foré un puits dans une couche aquifère saturée de gaz, jusqu'à une profondeur de 1200m; ce puits est caractérisé par les paramètres suivants :

| | |
|---|---|
| Profondeur du gisement | 1000 à 1500 m |
| Epaisseur du bassin aquifère | 500 m |
| Volume spécifique du gaz dissous | 1,5 à 2 m3/m3 |

| Composants du gaz dissous: | |
|---|---|
| CH₄ | 95 à 98% |
| C₂H₆-C₅H₁₂ | 0,5 à 0,3% |
| Pression de la couche | 10 à 15 MPa |
| Température de la couche | 20°C |
| Densité de l'eau de la couche aquifère | 1,011 |

Par des procédés connus, on forme une capacité d'accumulation 3 à la limite entre la couche argileuse et la couche sablonneuse (on a dû étancher l'une des failles, ce qui a été réalisé par pompage de mortier de ciment). Dans le puits, à l'aide d'un câble de levage, est installée dans la couche aquifère 1 la source d'oscillations 5. On exerce ensuite une action de dégazage à l'aide de vibrations ondulatoires, selon le schéma représenté à la figure 1.

Au cours de l'action de dégazage (et après) réalisée par des oscillations dans la couche aquifère, commence le dégagement du gaz dissous qui, du fait de son poids spécifique très inférieur à celui de l'eau, monte et s'accumule dans la capacité d'accumulation 3, pour être repris par le tronçon perforé 4 du puits 2 et évacué à la surface. Le débit de prélèvement du gaz dans le puits est contrôlé.

On va maintenant examiner un exemple de mode de réalisation du procédé dans une région sismiquement active, la couche aquifère saturée de gaz au niveau du complexe jurassique étant caractérisée par les paramètres suivants : l'eau chargée en ions chlore et calcium présente une minéralisation totale de 91 à 147 g/l, avec une teneur élevée en iode (1 à 12 mg/l) et en brome (294 à 426 mg/l).
Les eaux de la couche aquifère se caractérisent par une saturation en gaz élevée (2581 N.cm³/l à 3172 N.cm³/l). Les gaz dissous dans l'eau sont de préférence constitués par du méthane dont la concentration atteint 83 à 95%. La teneur en hydrocarbures lourds ne dépasse pas 5%. Dans la composition du gaz, on identifie de l'azote jusqu'à une teneur de 10% et des constituants acides jusqu'à une teneur de 0,5%. La pression totale du gaz dissous atteint de 21 à 51 MPA.

Pour la mise en oeuvre du procédé, on fore un puits jusqu'à une profondeur d'environ 3000m, on crée par des procédés connus une capacité d'accumulation dans laquelle s'accumule le gaz dégagé à la suite de l'action sismique. Après une période de sédimentation et de stabilisation de la séparation eau/gaz, on peut procéder au prélèvement du gaz. La cadence de prélèvement du gaz à partir de la capacité d'accumulation est fonction du déplacement observé de l'interface gaz/eau (IGE) et est déterminée par la position de cet interface.

On effectue le prélèvement du gaz à partir du haut de la capacité et la partie de queue du puits de forage est utilisée pour le contrôle de la position de l'interface (IGE) par des procédés géophysiques. Dans le cas où l'effet sismique cesserait pendant une longue période, on réaliserait une action de dégazage supplémentaire par l'un des procédés décrits ci-dessus.

De la façon décrite, le procédé selon l'invention permet de résoudre simultanément les problèmes: de l'extraction du gaz, de son accumulation et de son stockage, et cela souvent à proximité directe des consommateurs.

### Caractère industriel de l'invention

Le procédé proposé permet d'exploiter des gisements de gaz non utilisés auparavant et qui avaient été classés parmi les réserves irrécupérables et d'exploiter par conséquent des gisements de gaz, parfois rapprochés des consommateurs, en résolvant de façon optimale le problème du stockage du gaz. Le procédé permet par ailleurs de résoudre, à l'aide d'un seul système de commande automatique, les problèmes de consommation et de production, de réaliser plus efficacement le contrôle du processus d'élaboration et de livraison du gaz, de réduire les dépenses de personnel, de matière, d'énergie, de financement et autres, y compris du fait de la diminution de la distance de transport du gaz (et du matériel). Le procédé permet également de réduire les dépenses pour la construction des conduites principales de transport, pour les stations de pompage, de stockage, etc... Le procédé exerce par ailleurs un effet écologique en réduisant les pertes et autres nuisances liées, par exemple, à un transport lointain du gaz.

Le procédé peut présenter d'autres avantages découlant de la description présentée et évidents pour l'homme de l'art dans le domaine de la technique considéré.

## Revendications

1. Procédé d'approvisionnement de consommateurs en gaz, comprenant les étapes consistant à former une capacité d'accumulation, à la remplir de gaz et à distribuer ce gaz aux consommateurs, caractérisé en ce qu'on forme la capacité d'accumulation au-dessus d'une couche aquifère saturée de gaz et en ce que l'on exerce périodiquement une action de dégazage de la couche aquifère saturée en gaz pour le remplissage de la capacité.

2. Procédé selon la revendication 1, caractérisé en ce que l'on exerce l'action périodique sur la couche aquifère saturée de gaz en générant des oscillations élastiques venant des sources d'oscillations disposées à la surface de la terre et/ou dans la couche aquifère saturée de gaz.

3. Procédé selon la revendication 1, caractérisé en ce que l'on forme la capacité d'accumulation au-dessus de la couche aquifère saturée de gaz en des emplacements où existe une source naturelle ou artificielle d'oscillations élastiques.

4. Procédé selon la revendication 1, caractérisé en ce que l'on exerce périodiquement l'action sur la couche aquifère saturée de gaz en créant des différences de pression.

5. Procédé selon la revendication 4, caractérisé en ce que l'on créée des différences de pression dans la couche aquifère saturée de gaz en évacuant de l'eau de celle-ci.

6. Procédé selon la revendication 1, caractérisé en ce que l'on exerce périodiquement l'action sur la couche aquifère saturée de gaz en augmentant la température.

7. Procédé selon la revendication 1, caractérisé en ce qu'on exerce périodiquement l'action sur la couche aquifère saturée de gaz par l'intermédiaire d'un champ électromagnétique.

8. Procédé selon la revendication 1, caractérisé en ce qu'on exerce périodiquement l'action sur la couche aquifère saturée de gaz par la combinaison d'au moins deux actions spécifiques parmi la génération d'oscillations élastiques, la création de différences de pression, l'augmentation de la température et la création d'un champ électromagnétique.

## Claims

1. A method for supplying gas to users comprising the steps of setting up an accumulating storage, filling it with gas and distributing gas to users characterized in that the accumulating storage is formed above a gas-saturated water-bearing bed and is filled by periodically performing a degassing action on the gas-saturated water-bearing bed.

2. The method according to Claim 1, characterized in that said periodic action on the gas-saturated water-bearing bed is produced by generating elastic vibrations from sources of vibrations arranged at the surface of the earth and/or in the gas-saturated water-bearing bed.

3. The method according to Claim 1, characterized in that the accumulating storage is formed above the gas-saturated water-bearing bed at points where a source of natural or artificial elastic vibrations is available.

4. The method according to Claim 1, characterized in that action on the gas-saturated water-bearing bed is periodically produced by creating pressure differences.

5. The method according to claim 4, characterized in that the said pressure differences in the gas-saturated water-bearing bed are created by evacuating the water therefrom.

6. The method according to Claim 1, characterized in that action on the gas-saturated water-bearing bed is periodically produced by increase of temperature.

7. The method according to Claim 1, characterized in that action on the gas-saturated water-bearing bed is periodically produced by an electromagnetic field.

8. The method according to Claim 1, characterized in that said action is periodically performed on the gas-saturated water-bearing bed by a combination of two or more effects selected from amongst generation of elastic vibrations, setting up a pressure differential, increase of temperature, and the setting up of an electromagnetic field.

## Patentansprüche

1. Verfahren zur Erdgasversorgung der Verbraucher, umfassend die Schritte, bestehend aus der Ausbildung einer Speicherkapazität, dessen Anfüllung mit Erdgas, und die Gaslieferung an die Verbraucher, dadurch gekennzeichnet, dass die Speicherkapazität über einer gasgesättigten Wassersohle ausgebildet und die Anfüllung der Speicherkapazität mit dem Erdgas durch eine periodische Einflussnahme zum Entgasen der gasgesättigten Wassersohle vorgenommen wird.

2. Verfahren nach Anspruch 1, dadurch gekennzeichnet, dass die periodische Einflussnahme auf die gasgesättigte Wassersohle durch von auf der Erdoberfläche und/oder in der gasgesättigten Wassersohle angeordneten Schwingungsquellen erzeugte elastische Schwingungen erzielt wird.

3. Verfahren nach Anspruch 1, dadurch gekennzeichnet, dass die Speicherkapazität über der gasgesättigte Wassersohle dort ausgebildet wird, wo eine natürliche oder künstliche Quelle elastischer Schwingungen vorhanden ist.

4. Verfahren nach Anspruch 1, dadurch gekennzeichnet, dass die periodische Einflussnahme auf die gasgesättigte Wassersohle durch die Erzeugung von Druckdifferenzen erzielt wird.

5. Verfahren nach Anspruch 4, dadurch gekennzeichnet, dass die Druckdifferenzen in der gasgesättigten Wassersohle durch die Evakuierung von Wasser aus derselben erhalten wird.

6. Verfahren nach Anspruch 1, dadurch gekennzeichnet, dass die periodische Einflussnahme auf die gasgesättigte Wassersohle durch eine Temperaturerhöhung erzielt wird.

7. Verfahren nach Anspruch 1, dadurch gekernzeichnet, dass die periodische Einflussnahme auf die gasgesättigte Wassersohle mittels eines elektromagnetischen Feldes erzielt wird.

8. Verfahren nach Anspruch 1, dadurch gekennzeichnet, dass die periodische Einflussnahme auf die gasgesättigte Wassersohle über die Kombination von mindestens zwei spezifischen Einflüssen ausgewählt aus der Erzeugung elastischer Schwingungen, der Erzeugung von Druckdifferenzen, der Temperaturerhöhung und der Erzeugung eines elektromagnetischen Feldes erzielt wird.
